**Europäisches Patentamt**

**European Patent Office**

**Office européen des brevets**

(11) Veröffentlichungsnummer: **0 192 597 B1**

# EUROPÄISCHE PATENTSCHRIFT

(45) Veröffentlichungstag der Patentschrift:
11.04.90

(51) Int. Cl.⁴: **F16L 55/16**, F16L 21/02

(21) Anmeldenummer: 86730015.4

(22) Anmeldetag: 28.01.86

(54) Muffeninnendichtung für Rohrstösse.

(30) Priorität: 18.02.85 DE 3506104

(43) Veröffentlichungstag der Anmeldung:
27.08.86 Patentblatt 86/35

(45) Bekanntmachung des Hinweises auf die Patenterteilung:
11.04.90 Patentblatt 90/15

(84) Benannte Vertragsstaaten:
AT BE CH DE FR GB IT LI LU NL SE

(56) Entgegenhaltungen:
DE-C- 2 814 497
DE-U- 6 923 771
US-A- 4 346 922

(73) Patentinhaber: WEGNER & CO.
Schweisswerk-Behälterbau, Buckower
Chaussee 106-107, D-1000 Berlin 48(DE)

(72) Erfinder: Fiedler, Dietmar, Dipl.-Ing.,
Paetschstrasse 17a, D-1000 Berlin 49(DE)
Erfinder: Fischer, Wilhelm, Dipl.-Ing., Dubrowstrasse 4,
D-1000 Berlin 37(DE)

(74) Vertreter: Pfenning, Meinig & Partner,
Kurfürstendamm 170, D-1000 Berlin 15(DE)

**Beschreibung**

Die Erfindung betrifft eine Muffeninnendichtung für Rohrstöße bei Rohrleitungen gemäß dem Oberbegriff des Anspruchs 1.

Aus der DE-C 28 14 497 ist eine Muffeninnendichtung für Rohrstöße bei Rohrleitungen bekannt, die aus einer die Stoßfugen übergreifenden Manschette aus nachgiebigem Material besteht, die beiderseits der Stoßfuge durch ringförmige Spannelemente unter Druck an der Innenwandung der Rohrleitung in Anlage gehalten ist und im Bereich der Spannelemente je eine in ihre Außenfläche eingebrachte ringförmige, in ihrer Breite der Breite des Spannringes angenäherte Ausnehmung besitzt, in der ein in unkomprimiertem Zustand die Rohrinnenwand berührendes Ringkissen aus einem Material hoher Rückstellkraft, beispielsweise Gummi, aufgenommen ist. Hierbei weist das Ringkissen in unkomprimiertem Zustand einen Abstand von den Seitenwänden der Ausnehmung auf, während es in komprimiertem Zustand bei in Spannstellung befindlichen Spannringen von der Rohrinnenwand und der Ausnehmung kammerartig umschlossen ist. Diese bekannte Muffeninnendichtung ist so ausgebildet, daß auch in komprimiertem Zustand das Ringkissen in radialer Richtung über die an die Seitenwände der Ausnehmung anschließenden Umfangsflächen hinausragt, so daß nur das Ringkissen an der Innenwandung der Rohrleitung anliegt. Das Ringkissen übernimmt somit sowohl die Funktion der Abdichtung als auch die der Halterung der Manschette innerhalb der Rohrleitung. Die gesamte von den Spannringen auf die Rohrinnenwand ausgeübte Druckkraft wird über das stark elastische Ringkissen übertragen. Um eine einwandfreie Befestigung der Manschette zu gewährleisten, muß dieser Druck erheblich höher sein, als für eine einwandfreie Abdichtung erforderlich ist. Auch kann, wenn der Spannvorgang nicht durch eine geeignete Meßvorrichtung überwacht wird, der Druck auf das Ringkissen wegen seiner stark elastischen Eigenschaften nicht genau kontrolliert werden. Auch insoweit besteht daher die Gefahr einer übermäßigen Beanspruchung des Ringkissens. Dieses besitzt daher, insbesondere bei häufigen Rohrbewegungen, eine relativ kurze Lebensdauer.

Es ist daher die Aufgabe der vorliegenden Erfindung, eine Muffeninnendichtung für Rohrstöße bei Rohrleitungen der bekannten Art in der Weise zu verbessern, daß das elastische Ringkissen auch bei unterschiedlich starken Spannzuständen stets der gleichen Druckbeanspruchung ausgesetzt ist und sich die Höhe dieser Druckbeanspruchung ausschließlich nach dem Erfordernis einer sicheren Abdichtung richtet.

Diese Aufgabe wird erfindungsgemäß gelöst durch die sich aus dem kennzeichnenden Teil des Anspruchs 1 ergebenden Merkmale. Vorteilhafte Ausbildungen der erfindungsgemäßen Muffeninnendichtung ergeben sich aus den Unteransprüchen.

Die Erfindung zeichnet sich dadurch aus, daß das Ringkissen sowohl in unkomprimiertem als auch in komprimiertem Zustand einen Abstand von den Seitenwänden der Ausnehmung aufweist, derart, daß in komprimiertem Zustand sowohl die an die Seitenwände der Ausnehmung beiderseitig anschließenden Umfangsflächen als auch das Ringkissen fest an der Innenwandung der Rohrleitung anliegen. Es findet somit eine Aufteilung der Funktionen der Abdichtung einerseits und der sicheren Halterung der Manschette in der Rohrleitung andererseits auf zwei verschiedene Elemente statt, nämlich das Ringkissen aus elastischem Material und die Umrandung der Ausnehmung, die aus relativ starrem Material besteht. Unterschiedlich große Spannkräfte führen stets zu der gleichen Kompression des Ringkissens, so daß dieses immer der gleichen Druckbeanspruchung ausgesetzt ist. Diese ist in gewünschter Weise entsprechend dem Erfordernis einer sicheren Abdichtung einstellbar.

Eine vorteilhafte Ausbildung der Muffeninnendichtung sieht vor, daß die Breite des Ringkissens über der sich in radialer Richtung erstreckenden Höhe angenähert konstant ist. Bei der bekannten Muffeninnendichtung ist das Ringkissen sich zu seiner Befestigung hin stark verjüngend ausgeformt, so daß die Gefahr besteht, daß es sich beim Spannen zu einer Seite hin umlegt und damit eine einwandfreie Abdichtung sowie sichere Befestigung der Manschette nicht gegeben ist. Dieser Mangel wird durch eine angenähert konstante Breite des Ringkissens vermieden.

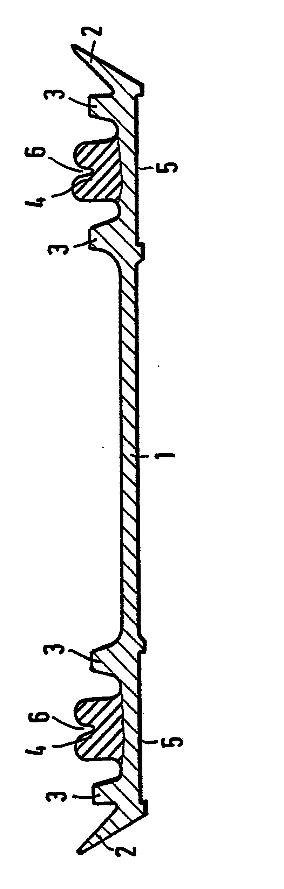

Die Erfindung wird im folgenden anhand eines in der Figur dargestellten Ausführungsbeispiels näher erläutert. Diese Figur zeigt einen Querschnitt durch eine als Muffeninnendichtung verwendbare ringförmige Manschette. Die Manschette besteht aus zwei symmetrischen Ringteilen, die durch einen Steg 1 miteinander verbunden sind. Die beiden symmetrischen Ringteile werden jeweils an der Innenwand eines von zwei aneinanderstoßenden Rohren angelegt und verspannt. Die Trennfuge zwischen den beiden Rohren befindet sich in axialer Richtung im Bereich des Steges 1, so daß die Enden der beiden aneinanderstoßenden Rohre nach außen hin abgedichtet sind.

Zu jeder Seite des Steges 1 weist die Manschette die folgenden ringförmigen Teile auf:

eine an sich bekannte, an der Rohrinnenwand anliegende Lippe 2, zwei zueinander parallele Wülste 3 sowie ein zwischen diesen befindliches Ringkissen 4.

Die Manschette wird so in die Rohrleitung eingesetzt, daß die Wülste 3 und die Ringkissen 4 and der Innenwandung der Rohrleitung anliegen. Die Ringkissen 4 bestehen aus einem Material mit relativ hoher Rückstellkraft, während die anderen Teile der Manschette aus einem diesem gegenüber relativ starren Material gebildet sind. In radialer Richtung gegenüber dem Ringkissen 4 und den Wülsten 3 weist die Manschette jeweils eine ringförmige Ausnehmung 5 auf, in die nicht dargestellte Spannringe eingesetzt werden.

Bei der Herstellung der Muffeninnendichtung wird zunächst die Manschette ringförmig an die Innenwandung der Rohrleitung angelegt, anschließend werden die Spannringe in die Ausnehmungen 5 eingesetzt und festgezogen. Die zunächst an der Rohrinnenwandung anliegenden Lippen 2 und Ringkissen 4 werden dabei zurückgedrückt, bis die relativ starren Wülste 3 ebenfalls an der Rohrinnenwandung anliegen. Die Ringkissen 4 füllen in diesem Zustand den jeweiligen Zwischenraum zwischen den Wülsten 3 nicht voll aus. Da die Wülste 3 praktisch nicht zusammenpreßbar sind, ist die Kompression und damit die Druckbeanspruchung für jedes Ringkissen auch bei unterschiedlich starker Spannung der Spannringe jeweils etwa gleich. Die Verformung der Ringkissen 4 bis zum Anliegen der Wülste 3 an der Rohrinnenwandung sollte mindestens 30% betragen. Hierdurch wird eine sichere Abdichtung des Rohrinnenraums gegenüber dem Außenraum gewährleistet.

Die in radialer Richtung verlaufenden Seitenwände der Ringkissen 4 sind annähernd parallel. Hierdurch ist sichergestellt, daß beim Spannen die Ringkissen symmetrisch zu beiden Seiten und nicht nur nach einer Seite ausweichen. Die Ringkissen 4 besitzen an der zur Rohrinnenwand weisenden Fläche einen Einschnitt 6, derart, daß sich nach dem Spannvorgang zwei parallel verlaufende Dichtflächen für jedes Ringkissen 4 ergeben.

Die Befestigung der Ringkissen 4 an den übrigen, aus einem anderen Material bestehenden Teilen der Manschette erfolge durch Vulkanisierung mit dem zwischen den Wülsten 3 liegenden Bodenteil.

## Patentansprüche

1. Muffeninnendichtung für Rohrstöße bei Rohrleitungen, bestehend aus eine die Stoßfugen übergreifenden Manschette aus nachgiebigem Material, die beiderseits der Stoßfugen durch ringförmige Spannelemente unter Druck an der Innenwandung derRohrleitung in Anlage gehalten ist, und im Bereich der Spannelemente je eine in ihre Außenfläche eingebrachte ringförmige, in ihrer Breite der Breite des Spannringes angenäherte Ausnehmung besitzt, in der ein im unkomprimierten Zustand die Rohrinnenwand berührendes und einen Abstand von den Seitenwänden der Ausnehmung besitzendes Ringkissen aus einem Material hoher Rückstellkraft, beispielsweise Gummi, aufgenommen ist, **dadurch gekennzeichnet,** daß das Ringkissen (4) auch im komprimierten Zustand einen Abstand von den Seitenwänden der Ausnehmung aufweist, und daß die an die Seitenwände der Ausnehmung beiderseitig anschließenden Umfangsflächen in radialer Richtung so weit vorragen, daß sie nach Erreichen einer sicheren Abdichtung durch das komprimierte Ringkissen (4) fest an der Innenwand der Rohrleitung anliegen.

2. Muffeninnendichtung nach Anspruch 1, dadurch gekennzeichnet, daß die Breite des Ringkissens (4) über der sich in radialer Richtung erstreckenden Höhe angenähert konstant ist.

3. Muffeninnendichtung nach Anspruch 1 oder 2, dadurch gekennzeichnet, daß die Kompression des Ringkissens (4) mindestens 30% beträgt.

4. Muffeninnendichtung nach einem der Ansprüche 1 bis 3, dadurch gekennzeichnet, daß das Ringkissen (4) am mittleren Bodenteil der Ausnehmung befestigt ist.

5. Muffeninnendichtung nach einem der Ansprüche 1 bis 4, dadurch gekennzeichnet, daß das Ringkissen (4) durch Vulkanisierung mit dem mittleren Bodenteil der Ausnehmung verbunden ist.

6. Muffeninnendichtung nach einem der Ansprüche 1 bis 5, dadurch gekennzeichnet, daß das Ringkissen (4) an der Berührungsstelle mit der Rohrinnenwand zur Ausbildung mehrerer Dichtflächen einen umlaufenden sickenartigen Einschnitt (6) besitzt.

7. Muffeninnendichtung nach einem der Ansprüche 1 bis 6, dadurch gekennzeichnet, daß die an die Seitenwände der Ausnehmung beiderseitig anschließenden Umfangsflächen der Manschette achsparallele Ringflächen zweier Wülste (3) sind.

## Claims

1. Internal sleeve seal for pipe joints on pipelines, comprising a collar of flexible material which fits over the seams of the joints and to both sides of the seams of the joints is held under pressure against the inside wall of the pipeline by ring-shaped tensioning elements, and in the region of the tensioning elements has a respective annular recess incorporated in its external surface and approximating in its width to the width of the tensioning ring, which recess houses an annular cushion (4) made from a material with good powers of recovery, for example rubber, which in the uncompressed state is in contact with the inside wall of the pipe and at a distance from the side walls of the recess, characterised in that the annular cushion (4) is also at a distance from the side walls of the recess when it is in the compressed state, and in that the circumferential surfaces adjoining the side walls of the recess to both sides protrude so far in the radial direction that they rest securely against the inside wall of the pipeline once the compressed annular cushion (4) has made a secure seal.

2. Internal sleeve seal according to claim 1, characterised in that the width of the annular cushion (4) is approximately constant over the height extending in the radial direction.

3. Internal sleeve seal according to claim 1 or 2, characterised in that the annular cushion (4) is compressed by at least 30%.

4. Internal sleeve seal according to one of claims 1 to 3, characterised in that the annular cushion (4) is fastened to the central floor section of the recess.

5. Internal sleeve seal according to one of claims 1 to 4, characterised in that the annular cushion (4) is joined to the central floor section of the recess by vulcanisation.

6. Internal sleeve seal according to one of claims 1 to 5, characterised in that at the point of contact with the inside wall of the pipe the annular cushion (4) has a peripheral bead-type incision (6) for forming a plurality of sealing faces.

7. Internal sleeve seal according to one of claims 1 to 6, characterised in that the circumferential faces of the collar adjoining the side walls of the recess to both sides are axially parallel annular faces of two flanges (3).

## Revendications

1. Garniture interne de manchon pour raccords de tuyaux en butée dans les canalisations tubulaires, constituée par une pièce de jonction en matière souple enjambant le joint de butée, qui est maintenue sous pression par des éléments de serrage annulaires contre la paroi interne de la canalisation de part et d'autre du point de butée, et qui comporte dans chacune des zones des éléments de serrage, une rainure annulaire ménagée dans sa surface externe ayant sensiblement une largeur proche de la largeur de la bague de serrage correspondante, rainure dans laquelle est disposé un coussinet annulaire (4) en une matière à force de rappel élevée, tel que du caoutchouc qui, dans son état non comprimé, vient au contact de la paroi interne du tuyau et est situé à une certaine distance des parois latérales de ladite rainure, caractérisée en ce que le coussinet annulaire (4) présente également dans son état comprimé une certaine distance par rapport aux parois latérales de la rainure, et en ce que les surfaces périphériques faisant suite de part et d'autre aux parois latérales de la rainure émergent en direction radiale de telle manière qu'elles sont poussées fermement contre la paroi interne de la canalisation lorsque l'on a obtenu une étanchéité certaine par la compression du coussinet annulaire (4).

2. Garniture interne de manchon selon la revendication 1, caractérisée en ce que la largeur du coussinet annulaire (4) est sensiblement constante sur toute sa hauteur en direction radiale.

3. Garniture interne de manchon selon l'une quelconque des revendications 1 et 2, caractérisée en ce que la compression du coussinet annulaire (4) est d'au moins 30%.

4. Garniture de manchon selon l'une quelconque des revendications 1 à 3, caractérisée en ce que le coussinet annulaire (4) est fixé au milieu de la partie formant le fond de la rainure.

5. Garniture interne de manchon selon l'une quelconque des revendications 1 à 4, caractérisée en ce que le coussinet annulaire (4) est relié par vulcanisation au milieu de la partie formant le fond de la rainure.

6. Garniture interne de manchon selon l'une quelconque des revendications 1 à 5, caractérisée en ce que le coussinet annulaire (4) possède dans sa zone de contact avec la paroi interne du tuyau une entaille circulaire moulurée, afin de donner naissance à plusieurs surfaces d'étanchéité.

7. Garniture interne de manchon selon l'une quelconque des revendications 1 à 6, caractérisée en ce que les surfaces périphériques raccordées de part et d'autre aux parois latérales de la rainure sont des surfaces annulaires de deux bourrelets (3) à axe parallèle au manchon.